Europäisches Patentamt

European Patent Office

Office européen des brevets

(19)

(11) Veröffentlichungsnummer : **0 033 773**
B2

## (12) NEUE EUROPÄISCHE PATENTSCHRIFT

(45) Veröffentlichungstag der neuen Patentschrift :
23.11.89

(21) Anmeldenummer : 80107574.8

(22) Anmeldetag : 04.12.80

(51) Int. Cl.⁴ : **B 65 G 47/68**

(54) **Vorrichtung zum Zuführen von Flaschen aus einer breiten Zuführungsbahn in eine schmale Zuführungsbahn.**

(30) Priorität : 06.02.80 DE 3004259

(43) Veröffentlichungstag der Anmeldung :
19.08.81 Patentblatt 81/33

(45) Bekanntmachung des Hinweises auf die Patenterteilung : 02.03.83 Patentblatt 83/09

(45) Bekanntmachung des Hinweises auf die Entscheidung
über den Einspruch : 23.11.89 Patentblatt 89/47

(84) Benannte Vertragsstaaten :
AT DE FR GB IT NL SE

(56) Entgegenhaltungen :
DE–A– 2 445 967
DE–A– 2 541 813
DE–A– 2 743 885
DE–A– 2 830 197
DE–U– 1 975 166
GB–A– 1 321 689
GB–A– 1 342 452

(73) Patentinhaber : Holstein & Kappert GmbH
Juchostrasse 20
D-4600 Dortmund 1 (DE)

(72) Erfinder : Karass, Hans-Joachim
Quarzweg 10
D-4600 Dortmund 30 (DE)

(74) Vertreter : Patentanwälte Meinke und Dabringhaus
Dipl.-Ing. J. Meinke Dipl.-Ing. W. Dabringhaus
Westenhellweg 67
D-4600 Dortmund 1 (DE)

EP 0 033 773 B2

**Beschreibung**

Die Erfindung betrifft eine Vorrichtung zum Zuführen von Flaschen aus einer breiten Zuführungsbahn mit mehreren nebeneinanderstehend angeordneten Flaschen in eine schmale Zuführungsbahn, in der die Flaschen nur hintereinanderstehend gefördert werden, mit einem dazwischen angeordneten Förderabschnitt mit parallel in Förderrichtung sich erstreckenden Förderstreifen, die mit von einer Seite des Förderabschnitts zur anderen ansteigender Geschwindigkeit angetrieben sind, und mit einer sich schräg über die Förderstreifen erstreckenden durchgehenden ersten Leitfläche, die im Bereich des Förderstreifens mit der geringsten Fördergeschwindigkeit an die breite Zuführungsbahn anschließt und im Bereich des Förderstreifens mit der höchsten Fördergeschwindigkeit in die schmale Zuführungsbahn einmündet, sowie mit einer durchgehenden zweiten Leitfläche, welche gemeinsam mit der ersten Leitfläche die Flaschen im Bereich des Förderabschnitts einschließt und sich im wesentlichen am Anfang des Förderabschnitts bis zum äußeren Rand desselben öffnet, wobei Mittel zur Vermeidung von Betriebsunterbrechungen durch umgefallene Flaschen im Bereich des Förderabschnitts vorgesehen sind.

Bei einer bekannten Vorrichtung dieser Art (DE-A-2 541 813) sind die Mittel zur Vermeidung von Betriebsunterbrechungen durch umgefallene Flaschen von einer oder mehreren Rücklaufbahnen gebildet, die sich in zur Bewegungsrichtung des Förderabschnitts entgegengesetzter Richtung bewegen. Die Rücklaufbahnen sind dabei von den in Förderrichtung bewegten Förderstreifen durch eine sich parallel zur Förderrichtung erstreckende Zwischenwand getrennt, mit Ausnahme von sowohl einer Zone in der Nähe des Endes der ersten Leitfläche als auch einer Zone am Anfang des Förderabschnitts, wo eine Führungsschiene zum Zurückführen von aufrecht stehenden Flaschen zu den in Förderrichtung bewegten Förderstreifen vorgesehen ist. Durch diese Ausbildung soll erreicht werden, daß umgefallene Flaschen oder zu weit seitlich verstellte aufrechte Flaschen keine Aufstauungen im Bereich der Einmündung des Förderabschnitts in die schmale Zuführungsbahn herbeiführen können.

Bei einer anderen bekannten Vorrichtung (DE-A-2 743 885) nähert sich die zweite Leitfläche von der breiten Zuführungsbahn an allmählich und kontinuierlich der ersten Leitfläche derart, daß sich eine kontinuierlich verengende Förderbahn zwischen der breiten und der schmalen Zuführungsbahn ergibt, wobei die Dimensionierung in Verbindung mit den Fördergeschwindigkeiten der einzelnen Förderstreifen derart gewählt ist, daß der gesamte Förderabschnitt zwischen breiter und schmaler Zuführungsbahn ständig mit Flaschen gepackt voll ist, was grundsätzlich auch gut funktioniert, sofern gewährleistet ist, daß alle Flaschen ordnungsgemäß stehend von der breiten Zuführungsbahn herkommen, aber zu Verstopfungen vor der Einmündung in die schmale Zuführungsbahn führen kann, wenn im Bereich der breiten Zuführungsbahn umgefallene Flaschen bis zu dieser Einmündung in die schmale Zuführungsbahn gelangen.

Bei der Konstruktion nach DE-A-2 451 813 kann es, abgesehen davon, daß der für die zuvor beschriebenen Mittel erforderliche Aufwand an Rückführbahnen, Zwischenwand und Rückführungsschiene beträchtlich ist, auch noch vorkommen, daß eine umgefallene Flasche im Einmündungsbereich des Förderabschnitts in die schmale Zuführungsbahn (bei wesentlicher Erstreckung in Richtung derselben) überwiegend nur auf dieser liegen bleibt, d. h. nicht in den Bereich der Rücklaufbahn gelangt und rückgefördert wird. Dadurch können Betriebsunterbrechungen in den nachgeschalteten Anlagenteilen vorkommen.

Bei der Vorrichtung nach DE-A-2 743 885 verursachen ferner die Flaschen im gesamten Bereich zwischen breiter und schmaler Zuführungsbahn bei den für nachgeschaltete Anlagen wie Flaschenfüllern extrem hohen Durchsatzgeschwindigkeiten wegen ihrer ständigen Anlage aneinander erhebliche Geräusche, während diese Geräusche bei der Vorrichtung nach der DE-A-2 541 813 durch das Zusammenwirken von den mit ansteigender Geschwindigkeit angetriebenen Förderstreifen mit der sich über diese schräg erstreckenden Leitfläche bereits ganz wesentlich verringert werden. Die mit ansteigender Geschwindigkeit angetriebenen Förderstreifen bewirken nämlich ein Auseinanderziehen der von der breiten Zuführungsbahn dicht gepackt ankommenden Flaschen, so daß diese nicht mehr bzw. nur noch wesentlich weniger miteinander in Berührung kommen, als bei der Vorrichtung nach DE-A-2 743 885.

Aufgabe der Erfindung ist die Schaffung einer Lösung, welche mit einfachsten Mitteln weitgehend sicherstellt, daß in den Bereich des Förderabschnitts gelangende umgefallene Flaschen Betriebsunterbrechungen am Übergang vom Förderabschnitt zur schmalen Zuführungsbahn nicht auslösen können.

Bei einer Vorrichtung der eingangs bezeichneten Art wird diese Aufgabe gemäß der Erfindung dadurch gelöst, daß die Förderfläche des Förderabschnitts leicht in Richtung auf die zweite Leitfläche hin derart geneigt ist, daß das Abrollen umgefallener Flaschen über einen zwischen den beiden Leitflächen bestehenden Freiraum zur zweiten Leitfläche hin möglich ist.

Durch diese Ausbildung wird erreicht, daß etwa von der breiten Zuführungsbahn her liegend angeförderte Flaschen durch die sofortige Verbreiterung am Beginn des zwischenliegenden Förderabschnitts infolge der Öffnung der zweiten Leitfläche ausreichend Platz dafür vorfinden, um in Richtung auf die zweite Leitfläche aus der Bahn der anderen stehenden Flaschen abrollen zu können, die durch die mit zunehmend höheren Geschwindigkeiten angetriebenen Förderstreifen derart auseinandergezogen und mit Abstand der schmalen Zuführungsbahn zugeführt werden, daß Festsetzungen im Bereich der Einmündung in die schmale Zuführungsbahn durch liegende Flaschen zuverlässig verhindert sind, weil diese nach Vorstehendem bereits am Anfang des Förderabschnitts, d. h. unmittelbar nach Verlassen der breiten Zuführungsbahn, an eine nicht behindernde Stelle infolge der Neigung der Förderfläche abrollen können und ggf., d. h. bei weiterer Ausgestaltung gemäß Anspruch 3, automatisch abgeführt werden. Diese absolut sichere Störungsbeseitigung wird nun erkennbar ohne jeden Mehraufwand, wie mit umgekehrter Förderrichtung anzutreibende Rückförderbahnen und zusätzliche Leitflächen, erreicht, weil es hierzu praktisch nur der leichten Schrägstellung des ohnehin vorhandenen Förderabschnitts zwischen den beiden Leitflächen bedarf, was ersichtlich keinerlei zusätzliche Konstruktionsteile und Antriebsmittel benötigt.

Als besonders günstig hat sich eine Neigung der Förderfläche des Förderabschnitts von ca. 5° erwiesen, da dadurch einerseits in ausreichendem Maße das Abrollen liegender Flaschen gewährleistet und andererseits die Standsicherheit der übrigen Flaschen nicht gefährdet wird.

Um auch über einen längeren Zeitraum keine Beobachtungsperson in dem betreffenden Flaschenvereinzelungsbereich zu benötigen, ist es ferner vorteilhaft, wenn die zweite leitfläche mit einem solchen Abstand über der Förderfläche des Förderabschnitts angeordnet ist, daß aufgrund der Neigung der Förderfläche anrollende Flaschen unter der zweiten Leitfläche hindurch in einen unterhalb derselben befindlichen Sammelbehälter abrollen können.

Um die nach Vorstehendem am Anfang der schmalen Zuführungsbahn mit Abstand voneinander ankommenden stehenden Flaschen zur kontinuierlichen Beschickung einer nachgeschalteten Anlage, wie eines Füllers, wieder aneinander heranzuführen, kann man ferner die beiden Leitflächen nach ihrer Zusammenführung im Bereich der schmalen Zuführungsbahn sich parallel zueinander schräg von dem Förderstreifen mit der höchsten Fördergeschwindigkeit mindestens über einen weiteren Förderstreifen mit geringerer Geschwindigkeit erstrecken lassen, wobei man durch entsprechende Wahl der Bahn der Leitflächen in Verbindung mit den Fördergeschwindigkeiten der von den Leitflächen überstrichenen Förderstreifen das Verdichten der Flaschen so sanft vornehmen kann, daß auch in diesem Bereich keine wesentlichen Lärmbelastungen entstehen.

Ferner kann man im Bereich der schmalen Zuführungsbahn einen Sensor anordnen, der, wenn er trotz der vorbeschriebenen Verdichtungsmaßnahmen an der Stelle seiner Anordnung Flaschenmangel feststellen sollte, die Geschwindigkeit aller Förderstreifen prozentual gleichmäßig erhöht.

Ergänzend kann man dabei dem Sensor einen Druckschalter in einem etwas breiteren Abschnitt der schmalen Zuführungsbahn vorschalten, der bei Betätigung infolge Flaschenstaus in diesem etwas breiteren Abschnitt die Geschwindigkeit aller Förderstreifen prozentual gleichmäßig verringert, wie ein solcher Flaschenstau auftreten kann, wenn die nachgeschaltete Anlage die Flaschen infolge der zu diesem Zeitpunkt eingestellten Fördergeschwindigkeit nicht mehr schlucken kann.

Schließlich kann man kurz vor der Einmündungsstelle der zweiten Leitfläche in die schmale Zuführungsbahn an der zweiten Leitfläche einen weiteren Druckschalter anordnen, der bei Flaschenstau in diesem Bereich die breitere Zuführungsbahn stillsetzt. Dadurch bleibt dann in jedem Fall gewährleistet, daß bei sich aufbauendem Stau im Zuführungsbereich zur schmalen Zuführungsbahn der Freiraum am Beginn des zwischen der breiten und schmalen Zuführungsbahn gelegenen Förderabschnitts zur Abführung liegend angeförderter Flaschen erhalten bleibt.

Die Erfindung ist nachstehend anhand der Zeichnung beispielsweise näher erläutert. Diese zeigt in

Fig. 1 eine Draufsicht auf eine Vorrichtung gemäß der Erfindung in schematisch vereinfachter Darstellung.

Fig. 2 einen vergrößerten Schnitt längs der Linie A-A der Fig. 1 und in

Fig. 3 eine vergrößerte Darstellung des Details B der Fig. 1.

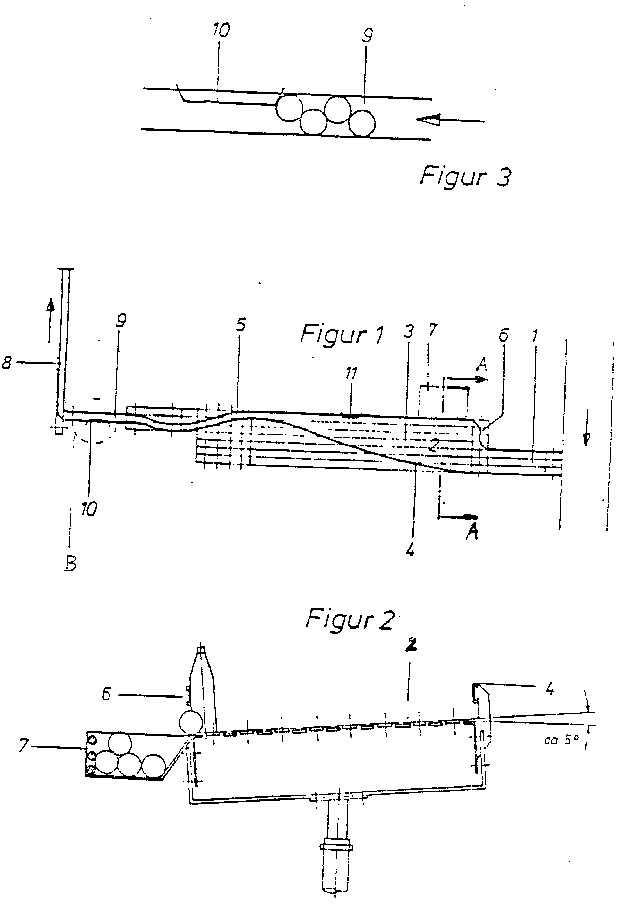

Bei der in Fig. 1. wiedergegebenen Draufsicht mündet eine derart breite Zuführungsbahn 1, daß mehrere Flaschen nebeneinanderstehend angefördert werden können, in einen beträchtlich breiteren Förderabschnitt 2 ein, der aus einer Anzahl von parallel zueinander verlaufenden Förderstreifen 3 gebildet ist, die mit von einer Seite des Förderabschnitts 2 zur anderen Seite desselben ansteigender Geschwindigkeit angetrieben sind.

Dabei erstreckt sich eine erste Leitfläche 4 vom Ende der breiten Zuführungsbahn 1 von einer Seite derselben im Bereich eines Förderstreifens $3_{min}$ mit der geringsten Fördergeschwindigkeit bis zum Bereich eiches Förderstreifens $3_{max}$ mit der höchsten Fördergeschwindigkeit und mündet dort in eine Seite einer schmalen Zuführungsbahn 5 ein, in der die Flaschen nur noch hintereinander gefördert werden können.

Eine zweite Leitfläche 6 öffnet sich von der anderen Seite der breiten Zuführunsbahn 1 herkommend am Anfang des Förderabschnitts 2 über die ganze Breite desselben und schließt zwischen sich und der ersten Leitfläche 4 alle Flaschen im Bereich des Förderabschnitts 2 ein, wobei die beiden Leitflächen 4 und 6 sich in entsprechende Leitflächen im Bereich der breiten Zuführungsbahn 1 und der schmalen Zuführungsbahn 5 fortsetzen.

Die Förderfläche des Förderabschnitts 2 ist dabei von der ersten Leitfläche 4 in Richtung auf die zweite Leitfläche 6 hin leicht geneigt angeordnet, vorzugsweise um ca. 5°, und die zweite Leitfläche 6 ist mindestens im breitesten Bereich des Förderabschnitts 2 mit einem solchen Abstand von der Förderfläche des Förderabschnitts 2 angeordnet, daß aufgrund der Neigung der Förderfläche anrollende Flaschen in einen unterhalb der Förderfläche befindlichen Sammelbehälter 7 abrollen können (s. Fig. 2), wodurch Inspektionen bzw. Überwachungen an dieser Stelle der Vorrichtung nur in sehr großen Abständen zu erfolgen brauchen, d. h. der erforderliche Personalaufwand ohne Erhöhung der Gefahr von Betriebsunterbrechungen entsprechend gering gehalten werden kann.

Wie Fig. 1 weiter zeigt, verlaufen die beiden Leitflächen 4 und 6 nach ihrer Zusammenführung im Bereich der schmalen Zuführungsbahn 5 parallel zueinander schräg von dem Förderstreifen $3_{max}$ mit der höchsten Fördergeschwindigkeit über zwei benachbarte Förderstreifen 3 mit jeweils aufeinanderfolgend herabgesetzter Geschwindigkeit.

Ferner ist nahe einer nicht gezeigten nachgeschalteten Anlage an der schmalen Zuführungsbahn 5 ein Sensor 8 angeordnet, der bei Flaschenmangel an dieser Stelle die Geschwindigkeit aller Förderstreifen 3 prozentual gleichmäßig erhöht.

Diesem Sensor 8 ist in einem etwas breiteren Abschnitt 9 der schmalen Zuführungsbahn 5 ein Druckschalter 10 vorgeschaltet, der bei Betätigung infolge Flaschenstaus in diesem etwas breiteren Abschnitt die Geschwindigkeit aller Förderstreifen prozentual gleichmäßig verringert (s. hierzu Fig. 3).

Schließlich ist ein dem Druckschalter 10 ähnlicher Druckschalter 11 kurz vor der Einmündungsstelle der zweiten Leitfläche 6 in die schmale Zuführungsbahn 5 an der zweiten Leitfläche 6 angeordnet, der bei Flaschenstaus in diesem Bereich die breitere Zuführungsbahn 1 stillsetzt.

Die Wirkungsweise der zuvor beschriebenen Vorrichtung ist wie folgt :

Die von der breiten Zuführungsbahn 1 nebeneinander stehend angeförderten Flaschen werden von den Förderstreifen 3 im Bereich des Förderabschnitts 2 in Richtung auf die Leitfläche 4 gefördert und von dieser in Richtung auf die gegenüberliegende zweite Leitfläche 6 kontinuierlich von den Förderstreifen mit geringerer Fördergeschwindigkeit auf die Förderstreifen mit größerer Fördergeschwindigkeit seitlich verschoben, wobei jeweils dann, wenn eine Flasche überwiegend auf einem Förderstreifen mit größerer Fördergeschwindigkeit zur Auflage gekommen ist, diese betreffende Flasche schneller abgefördert wird als die nachfolgenden Flaschen, wodurch die Flaschen auseinandergezogen werden und in vereinzelter Stellung die schmale Zuführungsbahn 5 erreichen. Sollte von der breiten Zuführungsbahn 1 eine Flasche in liegender Stellung dem Förderabschnitt 2 zugeführt werden, so ist erkennbar, daß infolge des Auseinanderziehens der Flaschen am Anfang des an dieser Stelle seine größte Breite aufweisenden Förderabschnitts 2 ein solcher Freiraum besteht, daß die liegende Flasche infolge der Neigung der Förderfläche des Förderabschnitts 2 in Richtung auf die Leitfläche 6 abrollen und durch den Spalt zwischen Leitfläche 6 und Förderabschnitt 2 sofort in den Sammelbehälter 7 fallen kann. Ferner ist erkennbar, daß die am Anfang der schmalen Zuführungsbahn 5 vereinzelt ankommenden Flaschen in der über die zwei an den Förderstreifen $3_{max}$ anschließenden Förderstreifen 3 mit geringerer Fördergeschwindigkeit geführten Zuführungsbahn 5 ihren Abstand voneinander wieder verringern, so daß am Ende der über diesen Bereich sich fortsetzende Förderstreifen 3 die Flaschen wieder aneinanderstoßend weitergefördert werden. Sollte dennoch im Bereich des Sensors 8 Flaschenmangel eintreten, so bewirkt der Sensor eine prozentual gleichmäßige Erhöhung der Geschwindigkeit aller Förderstreifen. Wenn daraufhin oder auch aus anderen Gründen, beispielsweise wegen eines Stillstands der nachgeschalteten Anlage, ein Stau im Bereich des Druckschalters 10 auftritt, so löst dieser wiederum eine prozentual gleichmäßige Verringerung der Geschwindigkeit aller Förderstreifen 3 aus, bis sich der Stau in diesem Bereich wieder abgebaut hat. Sollte aufgrund irgendwelcher Umstände im Bereich der Einmündung der zweiten Leitfläche 6 in die schmale Zuführungsbahn 5 ein Flaschenstau eintreten, so setzt der Druckschalter 11 die gesamte Flaschenzufuhr auf der breiten Zuführungsbahn 1 still, derart, daß jedenfalls die Abführung liegender Flaschen in dem davor angeordneten Bereich des Förderabschnitts 2 unbehindert bleibt.

Wie in Fig. 1 angedeutet, kann die breite Zuführungsbahn 1 auch aus gleich breiten Förderstreifen bestehen, wie die Förderstreifen 3 des Förderabschnitts 2 und die sich daran anschließenden Förderstreifen 3 des Förderabschnitts 2 können mit gleicher minimaler, der Fördergeschwindigkeit der Zuführungsbahn 1 entsprechender Fördergeschwindigkeit angetrieben werden, wodurch dann die Vereinzelung der Flaschen etwas später beginnt.

**Patentansprüche**

1. Vorrichtung zum Zuführen von Flaschen aus einer breiten Zuführungsbahn (1) mit mehreren nebeneinanderstehend angeordneten Flaschen in eine schmale Zuführungsbahn (5), in der die Flaschen nur hintereinanderstehend gefördert werden, mit einem dazwischen angeordneten Förderabschnitt (2) mit parallel in Förderrichtung sich erstreckenden Förderstreifen (3), die mit von einer Seite des Förderabschnitts zur anderen ansteigender Geschwindigkeit angetrieben sind, und mit einer sich schräg über die Förderstreifen (3) erstreckenden durchgehenden ersten Leitfläche (4), die im Bereich des Förderstreifens mit der geringsten Fördergeschwindigkeit an die breite Zuführungsbahn (1) anschließt und im Bereich des Förderstreifens mit der höchsten Fördergeschwindigkeit in die schmale Zuführungsbahn (5) einmündet, sowie mit einer durchgehenden zweiten Leitfläche (6), welche gemeinsam mit der ersten Leitfläche (4) die Flaschen im Bereich des Förderabschnitts (2) einschließt und sich im wesentlichen am Anfang des Förderabschnitts (2) bis zum äußeren Rand desselben öffnet, wobei Mittel zur Vermeidung von Betriebsunterbrechungen durch umgefallene Flaschen im Bereich des Förderabschnitts (2) vorgesehen sind, dadurch gekennzeichnet, daß die Förderfläche des Förderabschnitts (2) leicht in Richtung auf die zweite Leitfläche (6) hin derart geneigt ist, daß das Abrollen umgefallener Flaschen über einen zwischen den beiden Leitflächen (4, 6) bestehenden Freiraum zur zweiten Leitfläche (6) hin möglich ist.

2. Vorrichtung nach Anspruch 1, dadurch gekennzeichnet, daß die Neigung der Förderfläche des Förderabschnitts (2) ca. 5° beträgt.

3. Vorrichtung nach Anspruch 1 oder 2, dadurch gekennzeichnet, daß die zweite Leitfläche (6) mit einem solchen Abstand über der Förderfläche des Förderabschnitts (2) angeordnet ist, daß auf Grund der Neigung der Förderfläche anrollende Flaschen unter der zweiten Leitfläche hindurch in einen unterhalb derselben befindlichen Sammelbehälter (7) abrollen können.

4. Vorrichtung nach Anspruch 1 oder einem der folgenden, dadurch gekennzeichnet, daß die beiden Leitflächen (4, 6) nach ihrer Zusammenführung im Bereich der schmalen Zuführungsbahn (5) sich parallel zueinander schräg von dem Förderstreifen $(3_{max})$ mit der höchsten Fördergeschwindigkeit mindestens über einen weiteren Förderstreifen (3) mit geringerer Geschwindigkeit erstrecken.

5. Vorrichtung nach Anspruch 1 oder einem der folgenden, dadurch gekennzeichnet, daß im Bereich der schmalen Zuführungsbahn (5) ein Sensor (8) angeordnet sit, der bei Flaschenmangel die Geschwindigkeit aller Förderstreifen (3) prozentual gleichmäßig erhöht.

6. Vorrichtung nach Anspruch 5, dadurch gekennzeichnet, daß dem Sensor (8) ein Druckschalter (10) in einem etwas breiteren Abschnitt (9) der schmalen Zuführungsbahn (5) vorgeschaltet ist, der bei Betätigung infolge Flaschenstaus in diesem etwas breiteren Abschnitt die Geschwindigkeit aller Förderstreifen (3) prozentual gleichmäßig verringert.

7. Vorrichtung nach Anspruch 1 oder einem der folgenden, dadurch gekennzeichnet, daß kurz vor der Einmündungsstelle der zweiten Leitfläche (6) in die schmale Zuführungsbahn (5) an der zweiten Leitfläche ein Druckschalter (11) angeordnet ist, der bei Flaschenstau in diesem Bereich die breitere Zuführungsbahn (1) stillsetzt.

## Claims

1. Apparatus for feeding bottles from a wide feed track (1) with a plurality of bottles arranged one beside the other into a narrow feed track (5) in which the bottles are only conveyed one behind the other, comprising a conveyor section (2) which is arranged therebetween, with conveyor strips (3) which extend parallel in the direction of conveying movement and which are driven at a speed which increases from one side of the conveyor section to the other, and a continuous first guide surface (4) which extends at an inclined angle over the conveyor strips (3) and which joins the wide feed track (5) in the region of the conveyor strip moving at the lowest speed and which opens into the narrow feed track (5) in the region of the conveyor strip moving at the highest speeds, and a continuous second guide surface (6) which together with the first guide surface (4) confines the bottles in the region of the conveyor section (2) and opens substantially at the beginning of the conveyor section (2) as far as the outer edge thereof, wherein means are provided for preventing interruptions in operation due to bottles failling over in the region of the conveyor section (2), characterised in that the conveyor surface of the conveyor section (2) is inclined slightly towards the second guide surface (6) in such a way that it is possible for bottles which have fallen over to roll away over a free space between the two guide surfaces (4, 6) towards the second guide surface (6).

2. Apparatus according to claim 1 characterised in that the angle of inclination of the conveyor surface of the conveyor section (2) is about 5°.

3. Apparatus according to claim 1 or claim 2 characterised in that the second guide surface (6) is arranged at such a spacing above the conveyor surface of the conveyor section (2) that bottles rolling down because of the inclination of the conveyor surface can roll through under the second guide surface into a collecting container (7) which is disposed therebelow.

4. Apparatus according to claim 1 or one of the following claims characterised in that the two guide surfaces (4, 6), after coming together in the region of the narrow feed track (5), extend parallel to each other at an inclined angle from the conveyor strip $(3_{max})$ moving at the highest speed at least over a further conveyor strip (3) moving at a lower speed.

5. Apparatus according to claim 1 or one of the following claims characterised in that a sensor (8) is arranged in the region of the narrow feed track (5), for producing a uniform percentage increase in the speed of all conveyor strips (3) in the event of an absence of bottles.

6. Apparatus according to claim 5 characterised in that a pressure switch (10) is disposed upstream of the sensor (8) in a somewhat wider section (9) of the narrow feed track (5), which pressure switch produces a uniform percentage reduction in the speed of all conveyor strips (3), upon actuation of the switch as a result of an accumulation of bottles in said somewhat wider section (9).

7. Apparatus according to claim 1 or one of the following claims characterised in that a pressure switch (11) is arranged shortly upstream of the point at which the second guide surface (6) extends into the narrow feed track (5), at the second guide surface, the switch (11) stopping the wider feed track (1) in the event of an accumulation of bottles in that region.

## Revendications

1. Dispositif destiné à amener des bouteilles à partir d'une voie d'amenée large (1) où plusieurs bouteilles sont disposées les unes à côté des autres dans une voie d'amenée étroite (5) où les bouteilles ne sont acheminées que les unes derrière les autres, qui comprend une zone de transport (2) située entre ces voies et équipée de bandes transporteuses (3) s'étendant parallèlement dans la direction du transport, lesquelles sont entraînées avec une vitesse qui croît d'un côté de la zone de transport à l'autre, et une première paroi de guidage (4) s'étendant en biais sur les bandes transporteuses (3), laquelle paroi fait suite à la voie d'amenée large (1) au niveau de la bande transporteuse animée de la plus faible vitesse de transport et débouche dans la voie d'amenée étroite (5) au niveau de la bande transporteuse animée de la vitesse de transport la plus élevée, ainsi qu'une seconde paroi de guidage (6) qui, conjointement avec la première paroi de guidage (4), enferme les bouteilles au niveau de la zone de transport (2) et s'ouvre sensiblement au commencement de la zone de transport (2) jusqu'au bord extrême de celle-ci, des moyens étant prévus pour éviter les interruptions de service résultant de la culbute de bouteilles au niveau de la zone de transport (2), caractérisé en ce que le plan de transport de la zone de transport (2) est légèrement incliné en direction de la seconde paroi de guidage (6) de telle manière que les bouteilles culbutées puissent s'évacuer en roulant par dessus une zone libre située entre les deux parois de guidage (4, 6) vers la seconde paroi de guidage (6).

2. Dispositif selon la revendication 1, caractérisé en ce que l'inclinaison du plan de transport de la zone de transport (2) est d'environ 5°.

3. Dispositif selon la revendication 1 ou 2, caractérisé en ce que la seconde paroi de guidage (6) est disposée à une distance suffisante au-dessus du plan de transport de la zone de transport (2) pour que des bouteilles couchées puissent rouler par-dessous la seconde paroi de guidage vers le bas dans un récipient collecteur (7) situé au-dessous du plan de transport, par suite de l'inclinaison de ce plan.

4. Dispositif selon l'une quelconque des revendications 1 à 3, caractérisé en ce qu'au niveau de la voie d'amenée étroite (5) les deux parois de guidage (4, 6) s'étendent, après leur rapprochement, parallèlement l'une à l'autre en biais à partir de la bande transporteuse (3max) présentant la vitesse de transport la plus élevée sur au moins une autre bande transporteuse (3) à plus faible vitesse.

5. Dispositif selon l'une quelconque des revendications 1 à 4, caractérisé en ce qu'au niveau de la voie d'amenée étroite (5) est monté un capteur (8) qui en cas de manque de bouteilles augmente la vitesse de toutes les bandes transporteuses (3) uniformément en pourcentage.

6. Dispositif selon la revendication 5, caractérisé en ce qu'en amont du capteur (8) est monté dans une partie légèrement plus large (9) de la voie d'amenée étroite (5) un interrupteur à pression (10) qui en cas d'actionnement dû à une accumulation de bouteilles dans cette partie légèrement plus large réduit la vitesse de toutes les bandes transporteuses (3) uniformément en pourcentage.

7. Dispositif selon l'une quelconque des revendications 1 à 6, caractérisé en ce que peu avant l'endroit où la seconde paroi de guidage (6) débouche dans la voie d'amenée étroite (5) est monté sur la seconde paroi de guidage un interrupteur à pression (11) qui en cas d'accumulation de bouteilles dans cette région arrête la voie d'amenée plus large (1).

*Figur 3*

*Figur 1*

*Figur 2*

ca 5°